# EUROPEAN PATENT APPLICATION

(11) **EP 2 506 389 A2**
(43) Date of publication of application: **03.10.2012**
(21) Application number: 12159810.6
(22) Date of filing: 16.03.2012
(51) Int. Cl.: H02J 7/00, H02J 7/14

(54) **Auxiliary battery charging apparatus**

(30) Priority: 31.03.2011 JP 2011077935
(71) Applicant: Kabushiki Kaisha Toyota Jidoshokki, Kariya-shi Aichi 448-8671 (JP)
(72) Inventor: Kuraishi, Mamoru, Kariya-shi, Aichi 448-8671 (JP)
(74) Representative: TBK

(57) **Abstract**

An auxiliary battery charging apparatus (1) is configured to comprise: a main battery (41) provided with a plurality of rechargeable battery cells (7-1 to 7-n, 6) connected to each other in series; an external generator (2); a transistor (13) provided between the external generator (2) and an auxiliary battery (43); an operational amplifier (12) with a positive input terminal, a negative input terminal, and an output terminal, wherein an output voltage of one rechargeable battery cell (7-n, 6) of the plurality of rechargeable battery cells (7-n, 6) is input to the positive input terminal, a voltage applied to the transistor (13) is input to the negative input terminal, and the output terminal is connected to a control input terminal of the transistor (13); a switch (14) provided between the external generator (2) and the transistor (13) ; and a control circuit (5) to turn on the switch (14) to supply a current from the external generator (2) via the transistor (13) to the auxiliary battery (43) during charging of the auxiliary battery (43).

## Description

### FIELD

The present invention relates to an auxiliary battery charging apparatus for charging an auxiliary battery that is installed in a vehicle in addition to a main battery.

### BACKGROUND

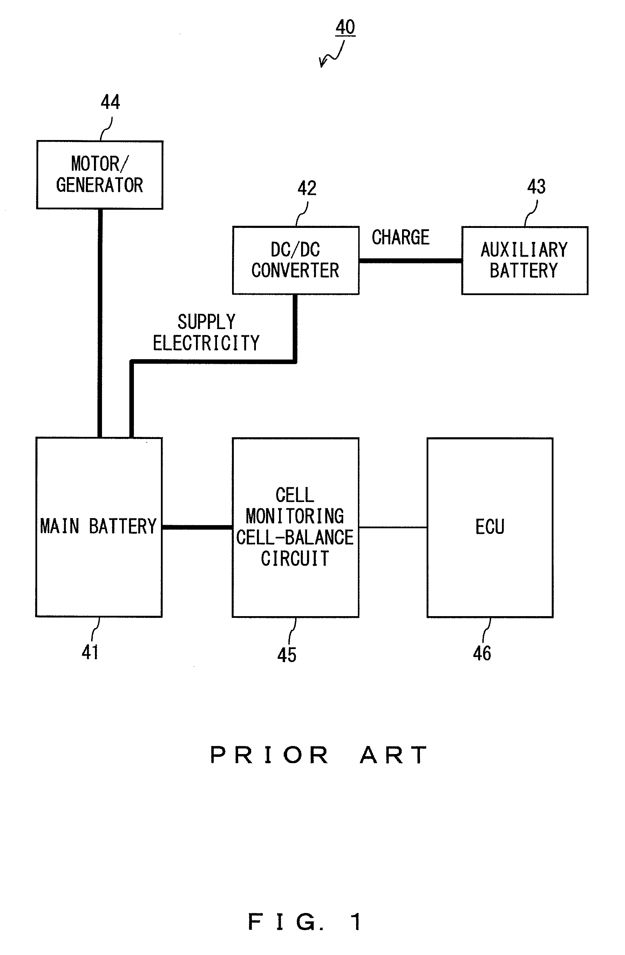

FIG. 1 illustrates an existing auxiliary battery charging apparatus.

An auxiliary battery charging apparatus 40 in FIG. 1 is installed in vehicles such as hybrid vehicles and electric vehicles, etc., and it comprises a main battery 41 and a DC/DC converter 42 which decreases the output voltage of the main battery 41 to charge an auxiliary battery 43.

The main battery 41 supplies electricity to a motor/generator 44.

The auxiliary battery 43 is a battery which supplies electricity to a control circuit for controlling the driving of the motor/generator 44 and to electronic equipment such as a car navigation system, and its power consumption is not low. Accordingly, an increase in the power consumption of the main battery 41 associated with the charging of the auxiliary battery 43 is a matter of concern.

The main battery 41 is configured to connect a plurality of rechargeable battery cells in series so that the output voltage can be increased; however, as much as possible, it is necessary to eliminate variations between the output voltages of the rechargeable battery cells in order to reduce the overall degradation.

Accordingly, to eliminate as much as possible the variation between the output voltages of the rechargeable battery cells of the main battery 41, the existing auxiliary battery charging apparatus 40 in FIG. 1 comprises: a cell-monitoring cell balance circuit 45 which equalizes the output voltages of the rechargeable battery cells; and an ECU 46 which controls the operation of the cell-monitoring cell balance circuit 45.

As an example, as a technique to equalize the output voltages of rechargeable battery cells (hereinafter referred to as "cell balancing"), there is a so-called active-system cell balancing wherein the output voltages of the rechargeable battery cells are equalized by discharging or charging the rechargeable battery cells via a transformer (see, for example, Japanese Laid-open Patent Publication No.2001-339865).

### SUMMARY

An object of the present invention is to provide an auxiliary battery charging apparatus which is capable of decreasing the power consumption of a main battery associated with charging of an auxiliary battery installed in a vehicle in addition to the main battery.

An auxiliary battery charging apparatus in accordance with the present invention comprises: a main battery provided with first and second rechargeable battery cells connected to each other in series; an external generator; a transistor provided between the external generator and an auxiliary battery; an operational amplifier with a positive input terminal, a negative input terminal, and an output terminal, wherein an output voltage of the second rechargeable battery cell is input to the positive input terminal, a voltage applied to the transistor is input to the negative input terminal, and the output terminal is connected to a control input terminal of the transistor; a first switch provided between the external generator and the transistor; and a control circuit which turns on the first switch to supply a current from the external generator via the transistor to the auxiliary battery during charging of the auxiliary battery.

As a result, the auxiliary battery does not need to be charged with electricity supplied from the main battery, and hence power consumption of the main battery associated with the charging of the auxiliary battery may be decreased.

The auxiliary battery charging apparatus also comprises: a transformer provided with a first coil connected to the external generator, a second coil connected to the first rechargeable battery cell, and a third coil connected to the second rechargeable battery cell; and a second switch provided between the first coil and the external generator. The control circuit may be configured to turn on or off the second switch to electromagnetically couple the first to third coils to each other while equalizing output voltages of the first and second rechargeable battery cells.

As a result, the rechargeable battery cells of the main battery may be charged with electricity supplied from the external generator, and variations between the output voltages of the rechargeable battery cells of the main battery may be reduced.

The control circuit may be configured to, while the main battery is not being used, turn on or off the second switch to equalize the output voltages of the first and second rechargeable battery cells, and then turn on the first switch to charge the auxiliary battery.

As a result, it is possible to further stabilize a voltage that is applied to the auxiliary battery while the auxiliary battery is being charged.

### BRIEF DESCRIPTION OF DRAWINGS

FIG. 1 is a diagram illustrating an existing auxiliary battery charging apparatus.
FIG. 2 is a diagram illustrating an auxiliary battery charging apparatus in accordance with an embodiment of the present invention.
FIG. 3 is a diagram illustrating an example of a cell monitoring cell-balance circuit in accordance with the present embodiment.
FIG. 4 is a diagram schematically illustrating an example of a timing chart of the timing of turning on or off each switch.

### DESCRIPTION OF EMBODIMENTS

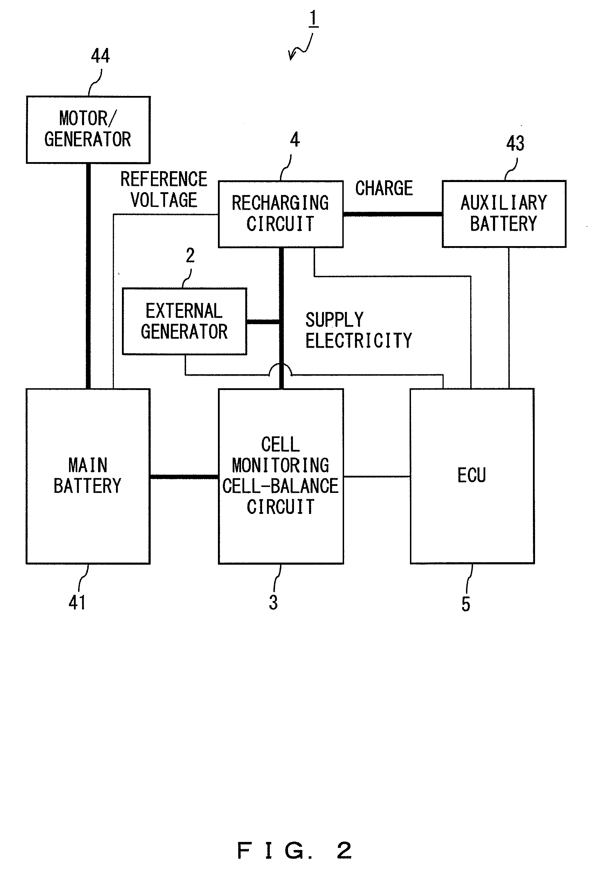

FIG. 2 is a diagram illustrating an auxiliary battery charging apparatus in accordance with an embodiment of the present invention. In FIG. 2, like parts are indicated by like numerals used for the existing auxiliary battery charging apparatus 40 in FIG. 1.

An auxiliary battery charging apparatus 1 in FIG. 2 comprises: a main battery 41 configured with a plurality of rechargeable battery cells connected to each other in series; an external generator 2; a cell monitoring cell-balance circuit 3 for equalizing output voltages of the rechargeable battery cells of the main battery 41; a charging circuit 4 for charging an auxiliary battery 43 (e.g., a lead storage battery or the like) with electricity supplied from the external generator 2 by using an output voltage (or reference voltage) of some of the rechargeable battery cells of the main battery 41; and an ECU (Electronic Control Unit) 5 (or control circuit) for controlling operations of the cell monitoring cell-balance circuit 3 and the charging circuit 4. The auxiliary battery charging apparatus 1 in accordance with the present embodiment is installed in vehicles such as hybrid vehicles, electric vehicles, or fork lift tracks. The reference voltage used to charge the auxiliary battery 43 is approximately as high as the voltage of the auxiliary battery 43 in a fully charged condition (e.g., 12V).

As described above, the auxiliary battery charging apparatus 1 in accordance with the present embodiment charges the auxiliary battery 43 with electricity supplied from the external generator 2, and, unlike the existing auxiliary battery charging apparatus 40 in FIG. 1, the auxiliary battery charging apparatus 1 does not charge the auxiliary battery 43 with electricity supplied from the main battery 41, so that power consumption of the main battery 41 associated with the charging of the auxiliary battery 43 may be decreased.

In addition, the auxiliary battery charging apparatus 1 in accordance with the present embodiment comprises the cell monitoring cell-balance circuit 3 and thus can reduce the variations between the output voltages of the rechargeable battery cells of the main battery 41.

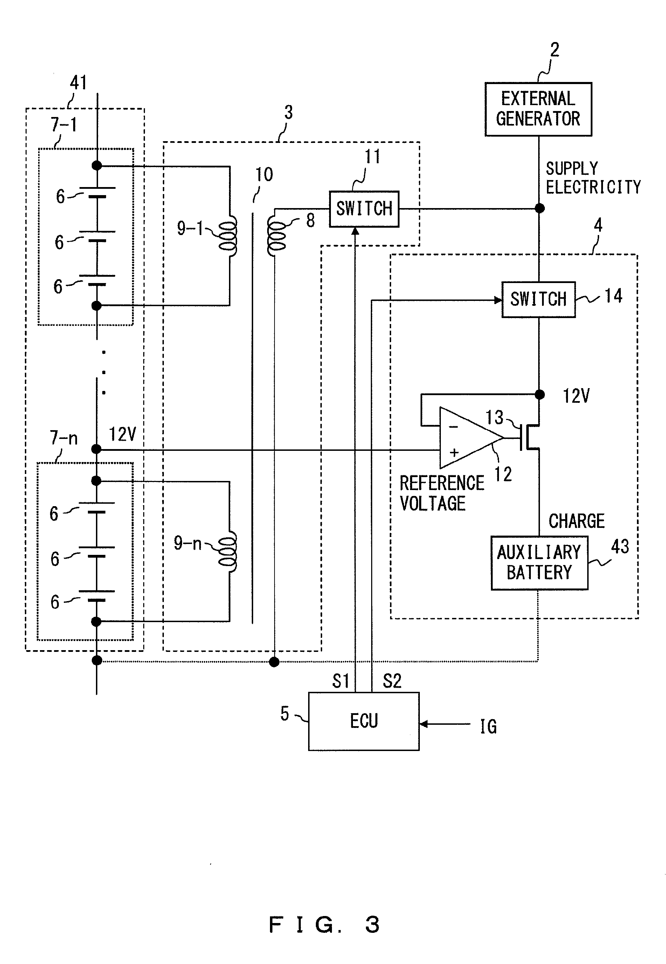

FIG. 3 is a diagram illustrating an example of the cell monitoring cell-balance circuit 3 and an example of the charging circuit 4. In the main battery 41, n number of modules 7 (i.e., modules 7-1 to 7-n) configured with three cells 6 (e.g., rechargeable battery cells such as lithium ion rechargeable battery cells or nickel hydride rechargeable battery cells) are connected to each other in series, wherein the three cells 6 are connected to each other in series. The number of cells 6 forming one module 7 is not limited to three.

The cell monitoring cell-balance circuit 3 in FIG. 3 comprises: a transformer 10 provided with a primary coil 8 connected to the external generator 2 and n number of secondary coils 9 (i.e., secondary coils 9-1 to 9-n) each connected to one of the modules 7 in parallel; and a switch 11 (i.e., a second switch) provided between the external generator 2 and the primary coil 8. The ratio between the number of loops of the primary coil 8 and the number of loops of all of the secondary coils 9 is 1:1.

The switch 11 is configured with, for example, a switching element such as a MOSFET. The switch 11 is turned on or off by a control signal S1 output from the ECU 5. The duty cycle of the control signal S1 is, for example, 50%.

The switch 11 is turned on and off while the output voltages of the modules 7-1 to 7-n are being equalized (i.e., during cell balancing). As a result, an alternating current flows through the primary coil 8, thereby electromagnetically connecting the primary coil 8 to the secondary coils 9-1 to 9-n. In this case, if, for example, the voltage of the secondary coil 9-1 is higher than the output voltage of the module 7-1, a current flows from the secondary coil 9-1 to the module 7-1 to charge the module 7-1. Then, when the output voltages of the modules 7-1 to 7-n are equalized, e.g., when the output voltages of the modules 7-1 to 7-n each become a lower limit threshold Vmin or higher and an upper limit threshold Vmax or lower, the switch 11 is turned off. As a result, the output voltages of the modules 7-1 to 7-n may be equalized.

The charging circuit 4 in FIG. 3 comprises an operational amplifier 12, a MOSFET 13, and a switch 14 (i.e., the first switch). The switch 14 is configured with, for example, a switching element such as a relay or MOSFET and is turned on or off by a control signal S2 output from the ECU 5.

That is, the MOSFET 13 is provided between the external generator 2 and the auxiliary battery 43. The switch 14 is provided between the external generator 2 and the MOSFET 13. The output voltage of the module 7-n is input to the positive input terminal of the operational amplifier 12 as a reference voltage, a voltage applied to the MOSFET 13 is input to the negative input terminal of the operational amplifier 12, and the output terminal of the operational amplifier 12 is connected to the gate terminal (the control input terminal) of the MOSFET 13. An imaginary short-circuit of the positive terminal and the negative terminal of the operational amplifier 12 causes a voltage that is essentially as high as the reference voltage (e.g., 12V) to be applied to the MOSFET 13. The gate terminal of the MOSFET 13 has applied to it a voltage that is lower than the voltage applied to the MOSFET 13 by about 1V, thereby turning on the MOSFET 13. In this way, the MOSFET 13 is provided between the external generator 2 and the auxiliary battery 43 to form a regulator through the negative feedback of the output voltage of the operational amplifier 12 via the MOSFET 13, and hence a voltage that is essentially as high as the output voltage of the module 7-n may be applied to the auxiliary battery 43 via the operational amplifier 12 and the MOSFET 13. Accordingly, even if the external generator 2 is composed of a solar-power generator or the like and the output voltage of the external generator 2 is thus unstable, a relatively stable voltage may be applied to the auxiliary battery 43 all the time.

While the auxiliary battery 43 is being charged, the switch 14 is turned on to electrically connect the external generator 2 to the MOSFET 13, and hence a current flows from the external generator 2 via the MOSFET 13 to the auxiliary battery 43, with the result that the auxiliary battery 43 is charged. The output voltage of the external generator 2 is on the order of the reference voltage or higher.

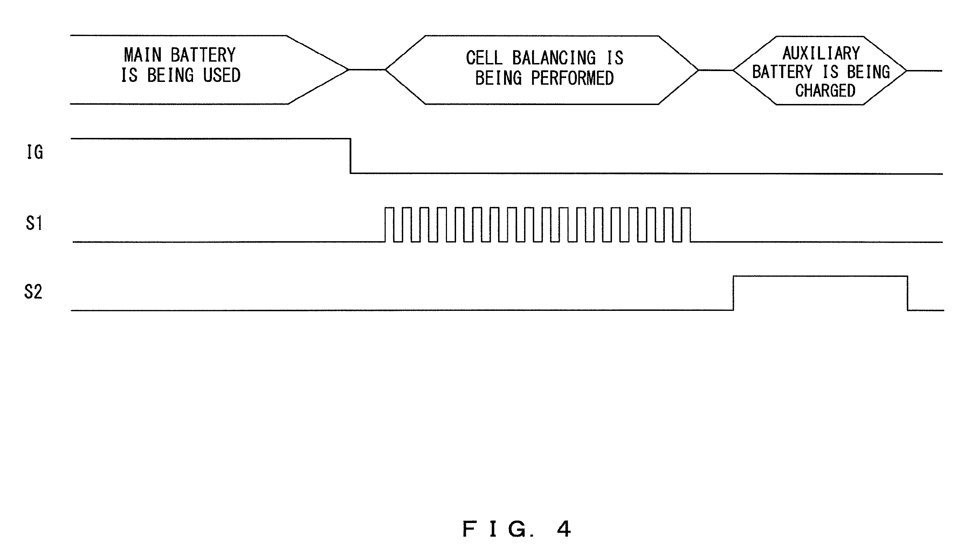

FIG. 4 is a diagram schematically illustrating an example of a timing chart of the timing of turning on or off the switches 11 and 14. Assume that, while an ignition signal IG output from an upper ECU that controls the entire vehicle is at a high level, i.e., while the main battery 41 is being used by the motor/generator 44 (e.g., while the vehicle is running), the control signals S1 and S2 are at a low level and the switches 11 and 14 are OFF.

First, the ECU 5 turns on or off the switch 11 using the control signal S1 when the ignition signal IG is switched from the high level to the low level, i.e., when the use of the main battery 41 is stopped (e.g., while the vehicle is being parked). In this way, upon the turning on or off of the switch 11 via the control signal S1, electricity supplied from the external generator 2 causes an alternating current to flow through the primary coil 8, and hence the primary coil 8 and the secondary coils 9-1 to 9-n are electromagnetically connected to each other. In this case, when, for example, the output voltage of the module 7-1 is higher than the voltage applied to the secondary coil 9-1, a current flows from the module 7-1 to the secondary coil 9-1, and hence the module 7-1 is discharged. When the output voltage of the module 7-2 is lower than the voltage applied to the secondary coil 9-2, a current flows from the secondary coil 9-2 to the module 7-2, and hence the module 7-2 is charged. In this way, through the charging and discharging of the modules 7-1 to 7-n via the transformer 10, the output voltage of each of the modules 7-1 to 7-n gradually approaches the average value of the output voltages of the modules 7-1 to 7-n. As a result, the output voltages of the modules 7-1 to 7-n may be equalized. In this case, in addition, electricity supplied from the external generator 2 increases the average value of the output voltages of the modules 7-1 to 7-n. In this case, the ECU 5 monitors the output voltages of the modules 7-1 to 7-n.

Next, when the output voltages of the modules 7-1 to 7-n are equalized, the ECU 5 turns off the switch 11 to terminate the charging of the modules 7-1 to 7-n. After this, when the ECU 5 determines that the auxiliary battery 43 needs to be charged, it, for example, monitors the voltage of the auxiliary battery 43, and when the ECU 5 determines that the voltage of the auxiliary battery 43 is equal to a threshold Vth1 or lower, it turns on the switch 14 to charge the auxiliary battery 43. In this case, as an example, the auxiliary battery 43 may be charged until it is fully charged or it may be charged until a little before it is fully charged.

To prevent the output voltage of the external generator 2 from exceeding the pressure-withstanding capacity of the operational amplifier 12 or the MOSFET 13 while the auxiliary battery 43 is being charged, the ECU 5 may be configured to turn off the switch 14 to disconnect the external generator 2 from the auxiliary battery 43 when the output voltage of the external generator 2 becomes a threshold Vth2 or higher.

To prevent the output voltage of the external generator 2 from exceeding the pressure-withstanding capacity of the operational amplifier 12 or the MOSFET 13 while the auxiliary battery 43 is being charged, a protective circuit composed of a plurality of serially connected diodes or the like may be provided between the switch 14 and the connection point at which the MOSFET 13 and the negative terminal of the operational amplifier 12 are connected to each other.

As described above, the auxiliary battery charging apparatus 1 in accordance with the present embodiment comprises the regulator configured with: the MOSFET 13 provided between the external generator 2 and the auxiliary battery 43; and the operational amplifier 12, wherein the output voltage of the module 7-n is input to the positive input terminal of the operational amplifier 12, and the output voltage of the operational amplifier 12 returns to the operational amplifier 12 through the negative feedback via the MOSFET 13. As a result, a voltage that is essentially as high as the output voltage of the module 7-n may be applied to the auxiliary battery 43, so that the auxiliary battery 43 can be charged by turning on the switch 14 provided between the external generator 2 and the MOSFET 13 to supply a current from the external generator 2 to the auxiliary battery 43. Accordingly, the auxiliary battery 43 does not need to be charged with electricity supplied from the main battery 41, and hence the power consumption of the main battery 41 associated with the charging of the auxiliary battery 43 may be decreased.

The auxiliary battery charging apparatus 1 in accordance with the present embodiment is configured to charge the auxiliary battery 43 after cell balancing, and hence a voltage which has been further stabilized may be applied to the auxiliary battery 43.

In the auxiliary battery charging apparatus 1 in accordance with the present embodiment, only a voltage (i.e., the reference voltage), not electric power, is supplied from the module 7-n to the operational amplifier 12, and hence the power consumption of the main battery 41 associated with the charging of the auxiliary battery 43 may be decreased.

The auxiliary battery charging apparatus 1 in accordance with the present embodiment does not need to be provided with the DC/DC converter 42 in FIG. 1, and hence the circuit scale may be reduced accordingly.

In the aforementioned embodiment, the auxiliary battery 43 is charged after cell balancing; however, the auxiliary battery 43 may instead be charged after the ECU 5 determines that the main battery 41 has been fully charged.

In the aforementioned embodiment, a bipolar transistor may be used instead of the MOSFET 13.

In the embodiment described above, the cell monitoring cell-balance circuit 3 may be omitted.

In accordance with the present invention, it is possible to decrease the power consumption of a main battery associated with charging of an auxiliary battery that is installed in a vehicle in addition to the main battery.

An auxiliary battery charging apparatus (1) is configured to comprise: a main battery (41) provided with a plurality of rechargeable battery cells (7-1 to 7-n, 6) connected to each other in series; an external generator (2); a transistor (13) provided between the external generator (2) and an auxiliary battery (43); an operational amplifier (12) with a positive input terminal, a negative input terminal, and an output terminal, wherein an output voltage of one rechargeable battery cell (7-n, 6) of the plurality of rechargeable battery cells (7-n, 6) is input to the positive input terminal, a voltage applied to the transistor (13) is input to the negative input terminal, and the output terminal is connected to a control input terminal of the transistor (13); a switch (14) provided between the external generator (2) and the transistor (13) ; and a control circuit (5) to turn on the switch (14) to supply a current from the external generator (2) via the transistor (13) to the auxiliary battery (43) during charging of the auxiliary battery (43).

## Claims

1. An auxiliary battery charging apparatus (1) comprising:
a main battery (41) provided with first and second rechargeable battery cells (7-1 to 7-n, 6) connected to each other in series;
an external generator (2);
a transistor (13) provided between the external generator (2) and an auxiliary battery (43);
an operational amplifier (12) with a positive input terminal, a negative input terminal, and an output terminal, wherein an output voltage of the second rechargeable battery cell (7-n, 6) is input to the positive input terminal, a voltage applied to the transistor (13) is input to the negative input terminal, and the output terminal is connected to a control input terminal of the transistor (13);
a first switch (14) provided between the external generator (2) and the transistor (13); and
a control circuit (5) to turn on the first switch (14) to supply a current from the external generator (2) via the transistor (13) to the auxiliary battery (43) during charging of the auxiliary battery (43).

2. The auxiliary battery charging apparatus (1) according to claim 1, comprising:
a transformer (3) provided with a first coil (8) connected to the external generator (2), a second coil (9-1) connected to the first rechargeable battery cell (7-1, 6), and a third coil (9-n) connected to the second rechargeable battery cell (7-n, 6); and
a second switch (11) provided between the first coil and the external generator, wherein
the control circuit (5) turns on or off the second switch (11) to electromagnetically couple the first to third coils (9-1 to 9-n) to each other while equalizing output voltages of the first and second rechargeable battery cells (7-1 to 7-n, 6).

3. The auxiliary battery charging apparatus (1) according to claim 1, wherein
while the main battery (41) is not being used, the control circuit (5) turns on or off the second switch (11) to equalize output voltages of the first and second rechargeable battery cells (7-1 to 7-n, 6), and then turns on the first switch (14) to charge the auxiliary battery (43).

4. The auxiliary battery charging apparatus (1) according to claim 2, wherein
while the main battery (41) is not being used, the control circuit (5) turns on or off the second switch (11) to equalize output voltages of the first and second rechargeable battery cells (7-1 to 7-n, 6), and then turns on the first switch (14) to charge the auxiliary battery (43).
